# EUROPEAN PATENT APPLICATION

(11) **EP 4 491 673 A1**
(43) Date of publication of application: **15.01.2025**
(21) Application number: 23766531.0
(22) Date of filing: 21.02.2023
(51) Int. Cl.: C08L 83/07, C08K 3/013, C08K 5/3437, C08L 83/05, C09K 5/14

(54) **TWO-COMPONENT THERMALLY-CONDUCTIVE ADDITION-CURABLE SILICONE COMPOSITION AND CURED PRODUCT THEREOF**

(30) Priority: 08.03.2022 JP 2022035272
(71) Applicant: SHIN-ETSU CHEMICAL CO., LTD., Tokyo 1000005 (JP)
(72) Inventor: TABATA, Yuji, Annaka-shi, Gunma 379-0224 (JP); IWATA, Mitsuhiro, Annaka-shi, Gunma 379-0224 (JP)
(74) Representative: Mewburn Ellis LLP
(86) International application number: PCT/JP2023/006097
(87) International publication number: WO 2023/171353

(57) **Abstract**

A two-component thermally-conductive addition-curable silicone constituted of a first component and a second component, wherein, the first component contains:
(A) an organopolysiloxane having an alkenyl group bonded to a silicon atom,
(C) a thermally-conductive filler, and
(E) a platinum group metal catalyst; and
the second component contains:
(A) an organopolysiloxane having an alkenyl group bonded to a silicon atom,
(B) an organohydrogenpolysiloxane, and
(C) a thermally-conductive filler.
The first component does not contain component (B),
the second component does not contain component (E) and
one or both of the first and second components contains (D) a complex of a metal and a 8-quinolinol.

## Description

### TECHNICAL FIELD

This invention relates to a two-pack heat-conductive addition curable silicone composition. More particularly, it relates to a silicone composition which provides a heat-conductive silicone cured product which experiences a minimal hardness increase from the initial hardness during hot aging at 150°C, and a silicone cured product thereof.

### BACKGROUND ART

It is well known that electronic parts generate heat during operation and concomitantly degrade their performance. A variety of heat dissipating techniques are used to solve the problem. In one common technique, heat dissipation is achieved by disposing a cooling member such as heat sink near a heat generating member, bringing them in close contact, and effectively removing heat from the cooling member. If a gap is left between the heat generating member and the cooling member, less heat conductive air intervenes therebetween, leading to a reduction of thermal conductivity and failing to fully lower the temperature of the heat generating member. For the purpose of avoiding such a phenomenon, heat dissipating materials having a high thermal conductivity and conformable to the member surface, e.g., heat dissipating greases and sheets are employed. (See Patent Documents 1 to 13: JP 2938428, JP 2938429, JP 3580366, JP 3952184, JP 4572243, JP 4656340, JP 4913874, JP 4917380, JP 4933094, JP 5283346, JP 5233325, JP 5553006, and JP 5447337).

However, the heat dissipating grease of cure type which is sandwiched between members and then cured prior to use sometimes experiences a hardness increase with the lapse of time by the heat generated by an electronic part in the package. The heat dissipating grease having an increased hardness fails to follow the "warpage" of the contacting substrate surface accompanying thermal expansion/shrinkage, with a possibility that the grease peels from the substrate and loses its heat dissipating capability. As hardness increases, the material decreases its elongation and loses its follow-up ability. In addition, its Young's modulus increases, adversely affecting the solder joint life. For establishing a highly reliable material, it is important to restrain the hardness increase with the lapse of time.

Then, in order to prevent a heat-conductive polysiloxane material from increasing its hardness at high temperature with the lapse of time, Patent Document 14: JP 6048416 proposes a composition having a phthalocyaninato pigment incorporated therein. That is, JP 6048416 discloses a heat-conductive polysiloxane material experiencing a least hardness increase at 90°C and 120°C.

As the heat-conductive silicone composition experiencing minimal hardness increase upon hot aging, Patent Document 15: JP-A 2018-123200 proposes a composition having a variety of heat resistance improvers blended therein. That is, JP-A 2018-123200 discloses a heat-conductive silicone composition experiencing a least hardness increase on heating at 220°C for 250 hours.

On the other hand, mainly in the vehicle-mount application, it is often required to restrain any hardness increase during long-term aging at 150°C. Because of insufficient heat resistance, the prior art heat-conductive silicone compositions suffer from the problem that their hardness increases upon long-term aging at a high temperature in excess of 125°C for a duration in excess of 250 hours. When the amount of heat-conductive filler which causes a hardness increase is increased to achieve a high thermal conductivity, there remains the problem that hardness increases upon aging at 150°C.

### PRIOR ART DOCUMENTS

### PATENT DOCUMENTS

Patent Document 1: JP 2938428
Patent Document 2: JP 2938429
Patent Document 3: JP 3580366
Patent Document 4: JP 3952184
Patent Document 5: JP 4572243
Patent Document 6: JP 4656340
Patent Document 7: JP 4913874
Patent Document 8: JP 4917380
Patent Document 9: JP 4933094
Patent Document 10: JP 5283346
Patent Document 11: JP 5233325
Patent Document 12: JP 5553006
Patent Document 13: JP 5447337
Patent Document 14: JP 6048416
Patent Document 15: JP-A 2018-123200

### SUMMARY OF INVENTION

### TECHNICAL PROBLEM

An object of the invention, which has been made under the above-mentioned circumstances, is to provide a two-pack heat-conductive silicone composition which cures into a heat-conductive silicone cured product not only through heat curing, but also through room temperature curing, the silicone cured product experiencing a minimal hardness increase from the initial hardness during hot aging at 150°C and having high heat resistance.

### SOLUTION TO PROBLEM

Making extensive investigations to attain the above objects, the inventors have found that for a specific heat-conductive silicone composition of addition cure type, any hardness increase during 150°C aging can be restrained by blending a metal/8-quinolinol complex in the silicone composition; that for a two-pack heat-conductive silicone composition consisting of first and second packs, wherein the first pack contains (A) an organopolysiloxane having at least two silicon-bonded alkenyl groups per molecule, (C) a heat-conductive filler, and (E) a platinum group metal catalyst, the second pack contains (A) an organopolysiloxane having at least two silicon-bonded alkenyl groups per molecule, (B) an organohydrogenpolysiloxane having at least two silicon-bonded hydrogen atoms per molecule, and (C) a heat-conductive filler, blending (D) a metal/8-quinolinol complex in either one or both of the first and second packs allows the composition to cure into a product having high heat resistance not only through heat curing, but also through room temperature curing. The invention is predicated on this finding.

Accordingly, the invention provides a two-pack heat-conductive silicone composition as defined below.
1. A two-pack heat-conductive addition curable silicone composition consisting of first and second packs, wherein
   the first pack comprises
      (A) an organopolysiloxane having at least two silicon-bonded alkenyl groups per molecule,
      (C) a heat-conductive filler, and
      (E) a platinum group metal catalyst,
   the second pack comprises
      (A) an organopolysiloxane having at least two silicon-bonded alkenyl groups per molecule,
      (B) an organohydrogenpolysiloxane having at least two silicon-bonded hydrogen atoms per molecule, and
      (C) a heat-conductive filler,
   the first pack is free of component (B),
   the second pack is free of component (E),
   either one or both of the first and second packs contains (D) a metal/8-quinolinol complex,
   the overall composition obtained by combining the first pack with the second pack is such as to provide 0.1 to 5.0 silicon atom-bonded hydrogen atoms in component (B) per alkenyl group in component (A).
2. The two-pack heat-conductive addition curable silicone composition of 1, further comprising (F) an organosilane having the general formula (1):

   R¹aR²_{b}Si(OR³)_{4-a-b} (1)

   wherein R¹ is independently a C₄-C₂₀ monovalent hydrocarbon group, R² is independently a substituted or unsubstituted C₄-C₂₀ monovalent hydrocarbon group, R³ is independently a C₁-C₆ monovalent hydrocarbon group, a is an integer of 1 to 3, b is an integer of 0 to 2, a+b is an integer of 1 to 3.
3. The two-pack heat-conductive addition curable silicone composition of 1 or 2, further comprising (G) an organopolysiloxane having the general formula (2): 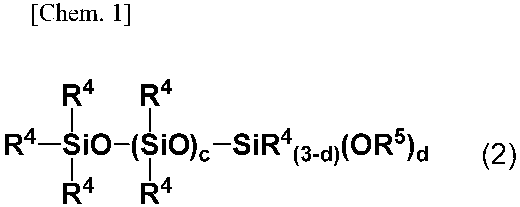 wherein R⁴ is independently a monovalent hydrocarbon group, R⁵ is independently an alkyl, alkoxyalkyl, alkenyl or acyl group, c is an integer of 5 to 100, and d is an integer of 1 to 3.
4. The two-pack heat-conductive addition curable silicone any one of 1 to 3 wherein the amount of component (C) blended in the first and second packs is 300 to 3,000 parts by weight per 100 parts by weight of components (A) and (B) combined,
   the amount of component (D) blended is 0.001 to 5.0% by weight based on the overall composition obtained by combining the first pack with the second pack, and
   the amount of component (E) blended is to provide 0.1 to 500 ppm by weight of platinum group metal based on the total weight of components (A) and (B) in the overall composition.
5. A two-pack heat-conductive addition cure type silicone cured product which is a cured product of the silicone composition of any one of 1 to 4.
6. The two-pack heat-conductive addition cure type silicone cured product of 5 which is of sheet form.

### ADVANTAGEOUS EFFECTS OF INVENTION

The two-pack heat-conductive addition curable silicone composition of the invention gives a cured product which experiences a minimal hardness increase from the initial hardness during 150°C aging as compared with cured products of prior art heat-conductive silicone compositions.

### DESCRIPTION OF EMBODIMENTS

Now the invention is described in detail.

One embodiment of the invention is a two-pack heat-conductive addition curable silicone composition consisting of first and second packs, wherein
the first pack comprises
   (A) an organopolysiloxane having at least two silicon-bonded alkenyl groups per molecule,
   (C) a heat-conductive filler, and
   (E) a platinum group metal catalyst,
the second pack comprises
   (A) an organopolysiloxane having at least two silicon-bonded alkenyl groups per molecule,
   (B) an organohydrogenpolysiloxane having at least two silicon-bonded hydrogen atoms per molecule, and
   (C) a heat-conductive filler,
the first pack is free of component (B),
the second pack is free of component (E),
either one or both of the first and second packs contains (D) a metal/8-quinolinol complex,
the overall composition obtained by combining the first pack with the second pack is such as to provide 0.1 to 5.0 silicon atom-bonded hydrogen atoms in component (B) per alkenyl group in component (A).

### [Component (A)]

Component (A) in the inventive composition is a main component or base polymer and may be used alone or in admixture of two or more. Component (A) is an organopolysiloxane having at least two alkenyl groups bonded to silicon atoms (referred to as "silicon-bonded alkenyl groups", hereinafter) per molecule. The number of silicon-bonded alkenyl groups is preferably 2 to 50, more preferably 2 to 20. The silicon-bonded alkenyl groups may be attached to a silicon atom at the end of the molecular chain or a silicon atom at a non-end position of the molecular chain (other than the end of the molecular chain) or a combination thereof.

Exemplary of component (A) is an organopolysiloxane having the average compositional formula (3):

R⁶ₑR⁷_{f}SiO_{(4-e-f)/2} (3)

wherein R⁶ is independently an alkenyl group, R⁷ is independently a substituted or unsubstituted monovalent hydrocarbon group free of aliphatic unsaturation, e is a positive number of 0.0001 to 0.2, f is a positive number of 1.7 to 2.2, and e+f is a positive number of 1.9 to 2.4.

Herein, e and f are selected such that at least two silicon-bonded alkenyl groups are contained in the molecule.

Examples of the alkenyl group include those of 2 to 6 carbon atoms such as vinyl, allyl, isopropenyl, 1-butenyl, 1-pentenyl and 1-hexenyl. Inter alia, alkenyl groups of 2 to 4 carbon atoms are preferred, with vinyl being more preferred.

The remaining organic groups bonded to silicon atoms (e.g., R⁷) include substituted or unsubstituted monovalent hydrocarbon groups free of aliphatic unsaturation, preferably of 1 to 12 carbon atoms, more preferably of 1 to 6 carbon atoms. Examples thereof include alkyl groups such as methyl, ethyl, propyl, isopropyl, butyl, isobutyl, tert-butyl, pentyl, hexyl, cyclohexyl, octyl, and dodecyl; aryl groups such as phenyl, 1-naphthyl, 2-naphthyl and tolyl; aralkyl groups such as benzyl and 2-phenylethyl; and substituted forms of the foregoing groups in which some or all of the hydrogen atoms are substituted by halogen atoms (e.g., fluorine, chlorine and bromine), such as chloromethyl and 3,3,3-trifluoropropyl. From the aspect of ease of synthesis, methyl, phenyl and 3,3,3-trifluoropropyl are preferred.

In formula (3), e is a positive number of 0.0001 to 0.2, preferably 0.0005 to 0.1, f is a positive number of 1.7 to 2.2, preferably 1.9 to 2.0, and e+f is a positive number of 1.9 to 2.4, preferably 1.95 to 2.05.

Component (A) has a kinematic viscosity in the range of preferably 10 to 100,000 mm²/s, more preferably 100 to 50,000 mm²/s as measured at 25°C by an Ostwald viscometer. When the kinematic viscosity is in the range of 50 to 100,000 mm²/s, the resulting cured product has better strength, fluidity and workability. The organopolysiloxane meeting the above requirements as component (A) is, for example, one having the general formula (4): 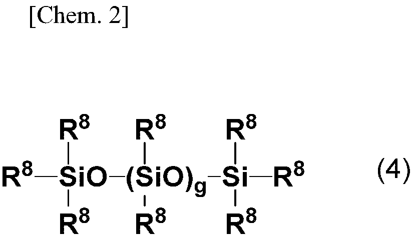 wherein R⁸ is independently a substituted or unsubstituted monovalent hydrocarbon group, at least two R⁸ being alkenyl groups, and g is an integer of 20 to 2,000.

In formula (4), the substituted or unsubstituted monovalent hydrocarbon group R⁸ is the same as defined for R⁶ (alkenyl group) and R⁷ (substituted or unsubstituted monovalent hydrocarbon group free of aliphatic unsaturation), and its carbon count and examples are also the same as mentioned above. At least 2, preferably 2 to 50, more preferably 2 to 20 of R⁸ are alkenyl groups. If the number of alkenyl groups is too small, the resulting heat-conductive silicone cured product has too low a crosslinking density or the composition remains uncured. If the number of alkenyl groups is too large, the resulting heat-conductive silicone cured product has a high crosslinking density, but the cure behavior may be unstable. The subscript g is preferably an integer of 40 to 1,200, more preferably 50 to 600. If g is too small, the resulting heat-conductive silicone composition has a low viscosity and is awkward to handle and work and the cured product becomes brittle. If g is too large, the resulting heat-conductive silicone composition has a high viscosity and is awkward to handle and work.

Examples of the organopolysiloxane having formula (4) include molecular both end dimethylvinylsiloxy-capped dimethylpolysiloxane, molecular both end trimethylsiloxy-capped dimethylsiloxane/methylvinylsiloxane copolymers, molecular one end trimethylsiloxy-capped, one end dimethylvinylsiloxy-capped dimethylsiloxane/methylvinylsiloxane copolymers, molecular both end dimethylvinylsiloxy-capped dimethylsiloxane/methylvinylsiloxane copolymers, and molecular both end dimethylvinylsiloxy-capped dimethylsiloxane/diphenylsiloxane copolymers.

The alkenyl-containing organopolysiloxane mentioned above is per-se known and can be prepared by prior art well-known methods.

### [Component (B)]

One example of component (B) is an organohydrogenpolysiloxane having at least two silicon-bonded hydrogen atoms per molecule, represented by the average compositional formula (5):

R⁹ₕHᵢSiO_{(4-h-i)/2} (5)

wherein R⁹ is independently a substituted or unsubstituted monovalent hydrocarbon group free of aliphatic unsaturation, h is a positive number of 0.7 to 2.2, i is a positive number of 0.001 to 0.5, and h+i is a positive number of 0.8 to 2.5. Herein, h and i are selected such that at least two silicon-bonded hydrogen atoms are contained in the molecule.

In formula (5), R⁹ is independently a substituted or unsubstituted monovalent hydrocarbon group free of aliphatic unsaturation, preferably of 1 to 12 carbon atoms, more preferably of 1 to 6 carbon atoms. Examples thereof include alkyl groups such as methyl, ethyl, propyl, isopropyl, butyl, isobutyl, tert-butyl, pentyl, hexyl, cyclohexyl, octyl, and dodecyl; aryl groups such as phenyl, 1-naphthyl, 2-naphthyl and tolyl; aralkyl groups such as benzyl and 2-phenylethyl; and substituted forms of the foregoing groups in which some or all of the hydrogen atoms are substituted by halogen atoms (e.g., fluorine, chlorine and bromine), such as chloromethyl and 3,3,3-trifluoropropyl. From the aspect of ease of synthesis, methyl, phenyl and 3,3,3-trifluoropropyl are preferred.

In formula (5), h is a positive number of 0.7 to 2.2, preferably 1.0 to 2.1, i is a positive number of 0.001 to 0.5, preferably 0.005 to 0.1, and h+i is a positive number of 0.8 to 2.5, preferably 1.0 to 2.3, more preferably 1.5 to 2.2. Notably, h and i are selected such that at least two silicon-bonded hydrogen atoms are contained in the molecule.

In the organohydrogenpolysiloxane as component (B), the number of silicon atoms per molecule (i.e., degree of polymerization) is generally 10 to 1,000. From the aspects of handling or working and better properties of the cured product, the DOP is preferably 20 to 500, more preferably 20 to 100. If DOP is too small, the heat-conductive silicone composition has a low viscosity and is awkward to handle and work, and the cured product becomes brittle. If DOP is too large, the resulting heat-conductive silicone composition has a high viscosity and is awkward to handle and work.

The molecular structure of the organohydrogenpolysiloxane as component (B) is not particularly limited as long as the above requirements are met.

The organohydrogenpolysiloxane as component (B) should preferably have a viscosity at 25°C of 1 to 10,000 mPa s, more preferably 3 to 2,000 mPa s, even more preferably 10 to 1,000 mPa·s and is preferably liquid at room temperature (25°C). Notably, the viscosity is measured by a Brookfield rotational viscometer. The type of spindle (e.g., BL, BM, BH, and BS type) and rotational speed are selected as appropriate depending on a particular viscosity.

Examples of the organohydrogenpolysiloxane having formula (5) include methylhydrogensiloxane/dimethylsiloxane cyclic copolymers, molecular both end dimethylhydrogensiloxy-capped methylhydrogenpolysiloxane, molecular both end dimethylhydrogensiloxy-capped methylhydrogen/dimethylsiloxane copolymers, molecular both end dimethylhydrogensiloxy-capped methylhydrogen/diphenylsiloxane copolymers, molecular both end dimethylhydrogensiloxy-capped methylhydrogen/dimethylsiloxane/diphenylsiloxane copolymers, molecular both end trimethylsiloxy-capped methylhydrogenpolysiloxane, molecular both end trimethylsiloxy-capped dimethylsiloxane/methylhydrogensiloxane copolymers, molecular both end trimethylsiloxy-capped methylhydrogensiloxane/diphenylsiloxane copolymers, molecular both end trimethylsiloxy-capped methylhydrogensiloxane/diphenylsiloxane/dimethylsiloxane copolymers, copolymers consisting of (CH₃)₂HSiO_{1/2} units, (CH₃)₂SiO units and CH₃SiO_{3/2} units, copolymers consisting of (CH₃)₂HSiO_{1/2} units, (CH₃)₂SiO units, (CH₃)HSiO units, and CH₃SiO_{3/2} units, copolymers consisting of (CH₃)₃SiO_{1/2} units, (CH₃)₂SiO units, (CH₃)HSiO units, and CH₃SiO_{3/2} units, copolymers consisting of (CH₃)₂HSiO_{1/2} units, (C₆H₅)₂SiO units, (CH₃)₂SiO units, and CH₃SiO_{3/2} units, copolymers consisting of (CH₃)(C₆H₅)HSiO_{1/2} units, (CH₃)₂SiO units and CH₃SiO_{3/2} units, copolymers consisting of (CH₃)₂HSiO_{1/2} units, (CH₃)₂SiO units and C₆H₅SiO_{3/2} units, copolymers consisting of (CH₃)(CF₃C₂H₄)HSiO_{1/2} units, (CH₃)(CF₃C₂H₄)SiO units and CH₃SiO_{3/2} units, copolymers consisting of (CH₃)(CF₃C₂H₄)HSiO_{1/2} units, (CH₃)(CF₃C₂H₄)SiO units, (CH₃)₂SiO units and CH₃SiO_{3/2} units, copolymers consisting of (CH₃)₂HSiO_{1/2} units, (CH₃)(CF₃C₂H₄)SiO units and CH₃SiO_{3/2} units, copolymers consisting of (CH₃)₂HSiO_{1/2} units, (CH₃)(CF₃C₂H₄)SiO units, (CH₃)₂SiO units and (CH₃)SiO_{3/2} units, copolymers consisting of (CH₃)₂HSiO_{1/2} units, (CH₃)(CF₃C₂H₄)SiO units, (CH₃)₂SiO units and (CF₃C₂H₄)SiO_{3/2} units, copolymers consisting of (CH₃)₂HSiO_{1/2} units, (CH₃)₂SiO units, and SiO_{4/2} units, copolymers consisting of (CH₃)₂HSiO_{1/2} units, (CH₃)₂SiO units, and SiO_{4/2} units, copolymers consisting of (CH₃)₂HSiO_{1/2} units, (CH₃)₂SiO units, (CH₃)HSiO units, and SiO_{4/2} units, and copolymers consisting of (CH₃)₃SiO_{1/2} units, (CH₃)₂SiO units, (CH₃)HSiO units, and SiO_{4/2} units.

Component (B) is used in the second pack, but not in the first pack. The organohydrogenpolysiloxane as component (B) is blended in such an amount that the number of silicon-bonded hydrogen atoms (or Si-H groups) is preferably 0.1 to 5.0, more preferably 0.1 to 2.0, even more preferably 0.1 to 1.5 per alkenyl group in component (A) in the overall composition obtained by combining the first and second packs. If the amount is too small, the storage stability-improving effect may become insufficient. If the amount is too large, the physical properties of the resulting heat-conductive silicone cured product may become unstable.

### [Component (C)]

Component (C) is a heat conductive filler, which may be used alone or in admixture. Examples of the heat conductive filler include aluminum hydroxide, magnesium hydroxide, aluminum oxide, crystalline silica, zinc oxide, magnesium oxide, titanium oxide, beryllium oxide, aluminum nitride, boron nitride, metallic silicon, silicon nitride, silicon carbide, gold, silver, copper, iron, nickel, aluminum, stainless steel, gallium, indium, graphite, carbon fibers, and diamond.

The heat conductive filler as component (C) should preferably have a thermal conductivity of 1 to 1,000 W/m·°C [W/(m·°C)], the lower limit of thermal conductivity being preferably at least 10 W/m·°C, more preferably at least 15 W/m °C. A higher thermal conductivity is preferred. The upper limit of thermal conductivity of a heat conductive filler which can be technically handled is preferably 1,000 W/m- °C. If the thermal conductivity of a filler is less than 1 W/m·°C, the heat-conductive silicone composition may have a low thermal conductivity.

The filler as component (C) may have any particle shape and is preferably in the form of ground particles, rounded particles, spherical particles or polyhedral particles. Component (C) preferably has an average particle size of 0.1 to 100 µm, more preferably 0.1 to 80 µm. The average particle size is a volume average particle diameter (cumulative average diameter D₅₀ or median diameter) as measured by laser diffractometry. If the average particle size is less than 0.1 µm, the resulting composition does not take grease form and is less extensible. If the average particle size is more than 100 µm, the heat-dissipating grease may have a greater thermal resistance, leading to a loss of performance.

Component (C) is used in both of the first and second packs. The ratio of the amounts of component (C) used in the first and second packs is not particularly limited as long as the mixing ratio of the first and second packs is an approximately equal weight ratio.

The amount of component (C) blended in the first and second packs is preferably 300 to 3,000 parts by weight, more preferably 300 to 2,800 parts by weight, even more preferably 300 to 2,500 parts by weight per 100 parts by weight of components (A) and (B) combined. If the amount of component (C) is less than 300 parts by weight, the composition may have a lower thermal conductivity. If the amount of component (C) is more than 3,000 parts by weight, the composition may experience a viscosity buildup and be less extensible.

### [Component (D)]

Component (D) is a metal/8-quinolinol complex, which may be used alone or in admixture. Examples of the metal include lithium, magnesium, aluminum, zinc, iron, copper, gallium, and indium. Inter alia, aluminum, zinc and copper are preferred, with copper being most preferred. Exemplary of component (D) is an additive selected from metal/8-quinolinol complexes having the general formula (6). 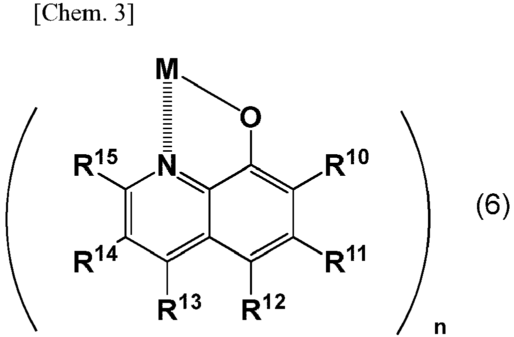 Herein R¹⁰ to R¹⁵ are independently hydrogen, halogen or a substituted or unsubstituted monovalent hydrocarbon group, and n is a positive number of 1 to 3.

Also included are hydrates of the complexes.

R¹⁰ to R¹⁵ are independently hydrogen, halogen or a substituted or unsubstituted monovalent organic group. Suitable halogen atoms include fluorine, chlorine, bromine and iodine. Suitable organic groups include monovalent hydrocarbon groups, alkoxy groups, acyl groups, amide groups, and amino groups.

The monovalent hydrocarbon groups are preferably of 1 to 12 carbon atoms, more preferably 1 to 6 carbon atoms. Examples of the monovalent hydrocarbon group include alkyl groups such as methyl, ethyl, propyl, isopropyl, butyl, isobutyl, tert-butyl, pentyl, hexyl, cyclohexyl, octyl, and dodecyl; aryl groups such as phenyl, 1-naphthyl, 2-naphthyl and tolyl; aralkyl groups such as benzyl and 2-phenylethyl; and substituted forms of the foregoing groups in which some or all of the hydrogen atoms are substituted by halogen atoms (e.g., fluorine, chlorine and bromine), such as chloromethyl and 3,3,3-trifluoropropyl.

Suitable alkoxy groups include alkoxy groups of 1 to 10 carbon atoms such as methoxy and ethoxy. Suitable acyl groups include formyl, acetyl and benzoyl. Typical of the amide group is acetylamide. Also included are nitro, nitroso, sulfo, and primary or secondary amino groups.

In formula (6), preferred examples of the metal atom M include lithium, magnesium, aluminum, zinc, iron, copper, gallium, and indium. Inter alia, aluminum, zinc and copper are preferred, with copper being most preferred.

Examples of the metal/8-quinolinol complex having formula (6) include bis(8-quinolinolato)copper(II), tris(8-quinolinolato)aluminum(III), bis(8-quinolinolato)zinc(II), (8-quinolinolato)lithium(I), bis(2-methyl-8-quinolinolato)copper(II), bis(2-methoxy-8-quinolinolato)copper(II), bis(2-formyl-8-quinolinolato)copper(II), bis(5-fluoro-8-quinolinolato)copper(II), bis(5-chloro-8-quinolinolato)copper(II), bis(5-bromo-8-quinolinolato)copper(II), bis(5,7-dibromo-8-quinolinolato)copper(II), and bis(5-nitroso-8-quinolinolato)copper(II).

Component (D) is blended in either one or both of the first and second packs.

The amount of component (D) blended is preferably 0.001 to 5.0% by weight, more preferably 0.01 to 1.0% by weight, even more preferably 0.01 to 0.5% by weight based on the overall composition. The amount of component (D) blended is preferably at least 0.001% by weight because the effect of restraining hardness increase upon hot aging is exerted more. An amount in excess of 5.0% by weight fails to exert a corresponding effect.

### [Component (E)]

The inventive composition contains a platinum group metal catalyst as component (E). It is a catalyst for promoting addition reaction of alkenyl groups in component (A) with silicon-bonded hydrogen atoms in component (B). Component (E) may be used alone or in admixture. Examples of component (E) include chloroplatinic acid, alcohol-modified chloroplatinic acids, coordination compounds of chloroplatinic acid with olefins, aldehydes, vinylsiloxanes, and acetylene compounds, tetrakis(triphenylphosphine)palladium, and chlorotris(triphenylphosphine)rhodium. Inter alia, platinum catalysts are preferred, with the complexes (or coordination compounds) of chloroplatinic acid with vinylsiloxanes being more preferred.

Component (E) is blended in the first pack only, but not in the second pack.

The amount of component (E) blended may be a catalytic amount and is preferably to provide 0.1 to 500 ppm, more preferably 2 to 100 ppm by weight of platinum group metal based on the total weight of components (A) and (B). As long as the amount of component (E) blended is within the range, adequate cure is achieved.

### [Component (F)]

If necessary, the inventive composition may contain an organosilane having the general formula (1):

R¹ₐR²_{b}Si(OR³)_{4-a-b} (1)

wherein R¹ is independently a C₄-C₂₀ monovalent hydrocarbon group, R² is independently a substituted or unsubstituted C₄-C₂₀ monovalent hydrocarbon group, R³ is independently a C₁-C₆ monovalent hydrocarbon group, a is an integer of 1 to 3, b is an integer of 0 to 2, a+b is an integer of 1 to 3 as component (F). Blending component (F) is effective for reducing the viscosity of the silicone composition. The organosilane (F) may be used alone or in admixture. Examples of component (F) include hexyltrimethoxysilane, decyltrimethoxysilane, hexadecyltrimethoxysilane, decylmethyldimethoxysilane, decyldimethylmethoxysilane, decyltriethoxysilane, 7-octenyltrimethoxysilane, and phenyltrimethoxysilane, with decyltriethoxysilane being preferred.

When component (F) is used, it is preferably furnished as a heat-treated mixture by mixing it with component (C) or components (A) to (C) and heating at a temperature of at least 70°C. Alternatively, component (C) is pretreated with component (F). The treatment of component (C) with component (F) is effective for reducing the viscosity of the silicone composition. For the surface treatment of component (C) with component (F), any of the spray mode using a fluid nozzle, the agitation mode involving shearing force, the dry mode using a ball mill or mixer, and the wet mode using water or organic solvents may be employed. Agitation is carried out to such an extent that the heat conductive filler may not be broken. In the dry mode, the temperature within the system or the drying temperature after treatment is determined as appropriate, typically 80 to 180°C, as long as the surface treating agent is not volatilized or decomposed.

Component (F) may be blended in either one or both of the first and second packs. When used, the amount of component (F) blended is preferably 0.1 to 5.0 parts by weight, more preferably 0.3 to 5.0 parts by weight per 100 parts by weight of component (C) in the overall composition obtained by combining the first and second packs. If the amount of component (F) is less than 0.1 part, the effect of achieving a lower viscosity is weak. An amount in excess of 5.0 parts exerts no extra effect.

### [Component (G)]

If necessary, the inventive composition may comprise an organopolysiloxane containing at least one hydrolyzable silyl group per molecule, represented by the general formula (2): 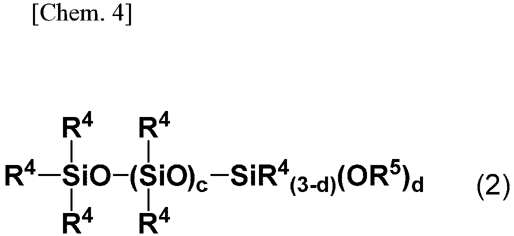 wherein R⁴ is independently a monovalent hydrocarbon group, R⁵ is independently an alkyl, alkoxyalkyl, alkenyl or acyl group, c is an integer of 5 to 100, and d is an integer of 1 to 3. Blending component (G) is effective for exerting the effect of reducing the viscosity of the silicone composition.

In formula (2), R⁴ is independently a substituted or unsubstituted monovalent hydrocarbon group, preferably of 1 to 10 carbon atoms, more preferably of 1 to 6 carbon atoms, even more preferably of 1 to 3 carbon atoms. Examples thereof include alkyl groups such as methyl, ethyl, propyl, isopropyl, butyl, isobutyl, tert-butyl, pentyl, hexyl, cyclohexyl, octyl, and dodecyl; aryl groups such as phenyl, 1-naphthyl, 2-naphthyl and tolyl; aralkyl groups such as benzyl and 2-phenylethyl; and substituted forms of the foregoing groups in which some or all of the hydrogen atoms are substituted by halogen atoms (e.g., fluorine, chlorine and bromine), such as chloromethyl and 3,3,3-trifluoropropyl. R⁴ is preferably methyl, phenyl or 3,3,3-trifluoropropyl.

In formula (2), R⁵ is independently an alkyl, alkoxyalkyl, alkenyl or acyl group. Examples of the alkyl group include straight alkyl groups, branched alkyl groups and cyclic alkyl groups as exemplified for R⁴. Examples of the alkoxyalkyl group include methoxyethyl and methoxypropyl, with alkoxyalkyl groups of 2 to 10 carbon atoms being preferred. Examples of the alkenyl group are as exemplified for R⁴, with alkenyl groups of 1 to 8 carbon atoms being preferred. Examples of the acyl group include acetyl and octanoyl, with acyl groups of 2 to 10 carbon atoms being preferred. R⁵ is preferably an alkyl group, more preferably methyl or ethyl.

In formula (2), c is an integer of 5 to 100, preferably 8 to 50, and d is an integer of 1 to 3, preferably 3. Examples of component (G) include (G1) used in Examples and organopolysiloxanes as shown below.

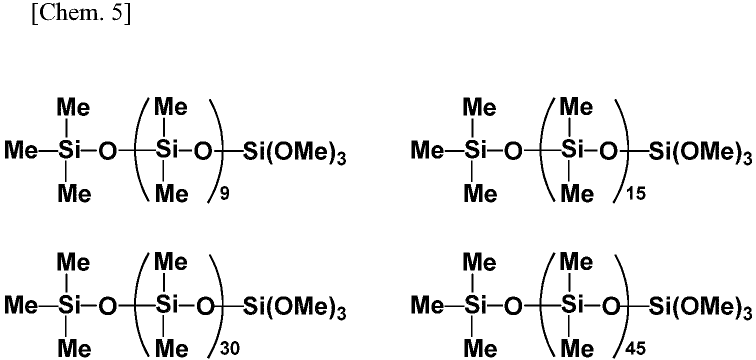

Me stands for methyl (the same holds true, hereinafter).

The organopolysiloxane as component (G) has a viscosity at 25°C of typically 0.01 to 30 Pa s, preferably 0.01 to 10 Pa s. If the viscosity is lower than 0.01 Pa s, the silicone composition may be susceptible to oil bleeding or bleeding of component (G). If the viscosity exceeds 30 Pa s, the resulting silicone composition becomes extremely less flowing and difficult in coating operation. Notably, the viscosity is measured by a Brookfield rotational viscometer. The type of spindle (e.g., BL, BM, BH, and BS type) and rotational speed are selected as appropriate depending on a particular viscosity.

When component (G) is used, it is preferably furnished as a heat-treated mixture by mixing it with component (C), or components (A) to (D) and heating at a temperature of at least 70°C, more preferably 80 to 180°C.

Component (G) may be blended in either one or both of the first and second packs. When used, the amount of component (G) blended is preferably 0.5 to 90.0 parts by weight, more preferably 1.0 to 90.0 parts by weight, even more preferably 1.5 to 70.0 parts by weight per 100 parts by weight of component (C) in the overall composition obtained by combining the first and second packs. If the amount of component (G) is less than 0.5 part, the effect of achieving a lower viscosity may be weak. If the amount exceeds 90.0 parts, the silicone composition may be susceptible to oil bleeding or bleeding of component (G).

In the inventive composition, a variety of per-se known additives may be blended besides the above-mentioned components (A) to (G) as long as the benefits of the invention are not impaired.

Specifically, there may be blended reaction inhibitors for modifying cure speed and storage stability such as triallyl isocyanate alkyl maleates, ethynyl decyl methyl carbinol, acetylene alcohols such as ethynyl cyclohexanol, and silane or siloxane modified products thereof, hydroperoxide, tetramethylethylene diamine, and benzotriazole; coloring agents such as ferrous oxide and ferric oxide, alone or in admixture; and thixotropic agents such as fumed silica. The amount of each additive is preferably 0.01 to 100,000 ppm by weight based on the overall composition.

### [Preparation method]

The inventive composition is a two-pack heat conductive addition curable silicone composition consisting of the first pack containing components (A), (C), (E) and optionally components (F) and (G) and other components, but being free of component (B), and the second pack containing components (A), (B), (C) and optionally components (F) and (G) and other components, but being free of component (E), either one or both of the first and second packs containing component (D).

The inventive composition may be prepared by mixing the first and second packs. For example, the method for preparing the first pack involves the steps of:
mixing components (A) and (C) and optionally component (D) and if necessary, components (F) and (G), heat treating at a temperature of at least 70°C, to form a heated mixture,
cooling the heated mixture to or below room temperature (25°C), and then adding component (E), and
the method for preparing the second pack involves
the steps of: mixing components (A), (B) and (C) and optionally component (D) and if necessary, components (F) and (G), heat treating at a temperature of at least 70°C, to form a heated mixture,
cooling the heated mixture to or below room temperature (25°C), and then adding a reaction inhibitor, coloring agent or thixotropic agent thereto.

Both the first and second packs are preferably heated at a temperature of at least 70°C, more preferably 70 to 180°C. The heating time is preferably at least 1 hour, more preferably 1 to 3 hours though not limited thereto. When an additive is blended, it may be added at any desired step, preferably after the heated mixture is cooled. The mixing means used in preparing the first and second packs may be selected from well-known mixers such as static mixers, planetary mixers, and puddle mixers.

The first and second packs should preferably have a thermal conductivity of at least 0.1 W/m·K, more preferably at least 0.5 W/m·K as measured by the hot disk method according to ISO 22007-2. Too low a thermal conductivity may lead to an insufficient capability of dissipating heat from heat-generating electronic parts. The upper limit of thermal conductivity, though not critical, may be up to 20.0 W/m·K, preferably up to 15.0 W/m·K. A thermal conductivity in the range can be achieved by adjusting the amount of component (C) in the above-specified range.

The viscosity at 25°C of the first and second packs is preferably 10 to 1,000 Pa s, more preferably 30 to 800 Pa s as measured by a spiral viscometer, for example, a Malcom viscometer Type PC-10AA at a rotational speed of 10 rpm. If the viscosity is too low, the composition may be insufficient in shape retention. If the viscosity is too high, the composition may be difficult to work. A viscosity in the range can be achieved by adjusting the amount of component (C) in the above-specified range.

For the inventive composition, it is preferred that the first and second packs have viscosities within a small difference. Then the first and second packs can be uniformly mixed by a static mixer. The viscosity at 25°C may be measured by a spiral viscometer. As the spiral viscometer, for example, a Malcom viscometer Type PC-10AA may be used. The difference between the initial viscosities of the first and second packs (as prepared) at a rotational speed of 10 rpm is preferably ±0 to 80%, more preferably ±0 to 50% based on the viscosity of the first pack.

For the inventive composition, it is preferred that the first and second packs be mixed at a substantially equal weight ratio. Specifically, the first and second packs are mixed in a weight ratio of preferably from 1:0.5 to 1:2, more preferably from 1:0.75 to 1:1.25, even more preferably from 1:0.9 to 1:1.1, most preferably from 1:0.95 to 1:1.05.

The composition obtained by mixing the first and second packs, prior to cure, should preferably have a thermal conductivity of at least 0.1 W/m·K, more preferably at least 0.5 W/m·K as measured by the hot disk method according to ISO 22007-2. Too low a thermal conductivity may lead to an insufficient capability of dissipating heat from heat-generating electronic parts. The upper limit of thermal conductivity, though not critical, may be up to 20.0 W/m·K, preferably up to 15.0 W/m·K. A thermal conductivity in the range can be achieved by adjusting the amount of component (C) in the above-specified range.

### [Heat-conductive addition curable silicone cured product]

The curing conditions for the inventive composition, which are not critical, may be the same as the curing conditions for well-known addition curable silicone compositions. For example, the composition fully cures at room temperature, but it may be heated if necessary. When the composition is cured at room temperature, the curing conditions include 0 to 40°C and 1 to 96 hours. When heated, the curing conditions include 70 to 200°C and 1 to 180 minutes.

The shape of the cured product is preferably a sheet though not particularly limited. The sheet preferably has a thickness of 0.1 to 10.0 mm. The cured product of the inventive composition preferably has a hardness of 10 to 90, more preferably 20 to 80, as measured in a 25°C environment by Shore OO hardness meter according to ASTM D 2240-05. After aging at 150°C for 2,000 hours, the cured product preferably has a hardness of 10 to 90, more preferably 20 to 80.

### EXAMPLES

Examples and Comparative Examples are given below for further illustrating the invention although the invention is not limited thereto. Herein, the bonding order of siloxane units in the formula is not particularly limited.

### [Example 1]

A 5-L planetary mixer (Inoue Mfg., Inc.) was charged with 50 parts by weight of molecular both end dimethylvinylsiloxy-capped dimethylpolysiloxane having a viscosity of 600 mm²/s and 40 parts by weight of molecular both end dimethylvinylsiloxy-capped dimethylpolysiloxane having a viscosity of 30,000 mm²/s as component (A), 240 parts by weight of fused spherical aluminum oxide A having an average particle size of 43 µm and 160 parts by weight of ground aluminum oxide B having an average particle size of 1.2 µm as component (C), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.25 part by weight of chloroplatinic acid/vinylsiloxane complex (Pt content 1 wt%) as component (E) was uniformly mixed therewith at room temperature (25°C) for 20 minutes, yielding a first pack of a heat-conductive addition curable silicone composition.

A 5-L planetary mixer (Inoue Mfg., Inc.) was charged with 50 parts by weight of molecular both end dimethylvinylsiloxy-capped dimethylpolysiloxane having a viscosity of 600 mm²/s and 30 parts by weight of molecular both end dimethylvinylsiloxy-capped dimethylpolysiloxane having a viscosity of 30,000 mm²/s as component (A), 5.2 parts by weight of dimethylhydrogensiloxy-capped methylhydrogen/dimethylpolysiloxane having the formula (B1) as component (B) ([Si-H group in polysiloxane as component (B)]/[total Si-Vi groups in molecular both end dimethylvinylsiloxy-capped dimethylpolysiloxanes as component (A) in the overall composition obtained by mixing first and second packs in a weight ratio of 1:1] = 0.41), 240 parts by weight of fused spherical aluminum oxide A having an average particle size of 43 µm and 160 parts by weight of ground aluminum oxide B having an average particle size of 1.2 µm as component (C), 0.25 part by weight of bis(8-quinolinolato)copper(II) having the formula (D1) (Tokyo Chemical Industry Co., Ltd.) as component (D), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.03 part by weight of ethynyl decyl methyl carbinol was uniformly mixed therewith at room temperature (25°C) for 20 minutes, yielding a second pack of a heat-conductive addition curable silicone composition.

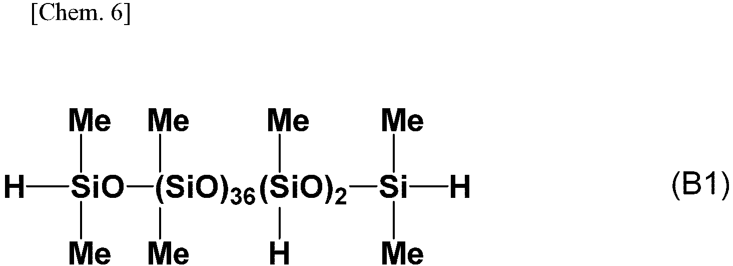

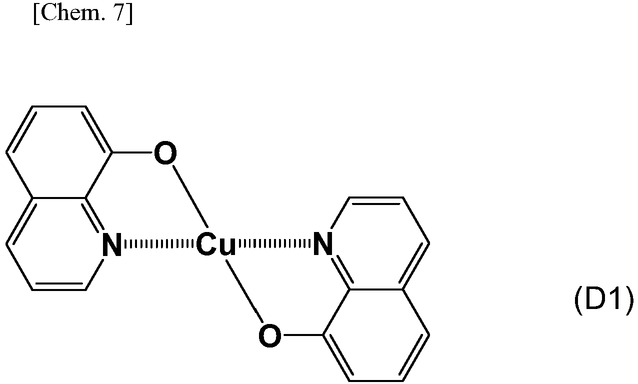

### [Comparative Example 1]

First and second packs of a heat-conductive addition curable silicone composition were obtained as in Example 1 aside from omitting bis(8-quinolinolato)copper(II) (Tokyo Chemical Industry Co., Ltd.) as (D) from the second pack.

### [Example 2]

A 5-L planetary mixer (Inoue Mfg., Inc.) was charged with 50 parts by weight of molecular both end dimethylvinylsiloxy-capped dimethylpolysiloxane having a viscosity of 600 mm²/s and 40 parts by weight of molecular both end dimethylvinylsiloxy-capped dimethylpolysiloxane having a viscosity of 30,000 mm²/s as component (A), 480 parts by weight of fused spherical aluminum oxide A having an average particle size of 43 µm and 320 parts by weight of ground aluminum oxide B having an average particle size of 1.2 µm as component (C). A heat-treated mixture was prepared by heat treating and mixing the components at 150°C for 1 hour.

After the heat-treated mixture was fully cooled to room temperature (25°C), 0.25 part by weight of chloroplatinic acid/vinylsiloxane complex (Pt content 1 wt%) as component (E) was uniformly mixed therewith at room temperature (25°C) for 20 minutes, yielding a first pack of a heat-conductive addition curable silicone composition.

A 5-L planetary mixer (Inoue Mfg., Inc.) was charged with 50 parts by weight of molecular both end dimethylvinylsiloxy-capped dimethylpolysiloxane having a viscosity of 600 mm²/s and 30 parts by weight of molecular both end dimethylvinylsiloxy-capped dimethylpolysiloxane having a viscosity of 30,000 mm²/s as component (A), 6.2 parts by weight of dimethylhydrogensiloxy-capped methylhydrogen/dimethylpolysiloxane having formula (B1) as component (B) ([Si-H group in polysiloxane as component (B)]/[total Si-Vi groups in molecular both end dimethylvinylsiloxy-capped dimethylpolysiloxanes as component (A) in the overall composition obtained by mixing first and second packs in a weight ratio of 1: 1] = 0.49), 480 parts by weight of fused spherical aluminum oxide A having an average particle size of 43 µm and 320 parts by weight of ground aluminum oxide B having an average particle size of 1.2 µm as component (C), and 0.5 part by weight of bis(8-quinolinolato)copper(II) having formula (D1) (Tokyo Chemical Industry Co., Ltd.) as component (D). A heat-treated mixture was prepared by heat treating and mixing the components at 150°C for 1 hour.

After the heat-treated mixture was fully cooled to room temperature (25°C), 0.03 part by weight of ethynyl decyl methyl carbinol was uniformly mixed therewith at room temperature (25°C) for 20 minutes, yielding a second pack of a heat-conductive addition curable silicone composition.

### [Comparative Example 2]

First and second packs of a heat-conductive addition curable silicone composition were obtained as in Example 2 aside from omitting bis(8-quinolinolato)copper(II) (Tokyo Chemical Industry Co., Ltd.) as (D) from the second pack.

### [Example 3]

A 5-L planetary mixer (Inoue Mfg., Inc.) was charged with 50 parts by weight of molecular both end dimethylvinylsiloxy-capped dimethylpolysiloxane having a viscosity of 600 mm²/s and 40 parts by weight of molecular both end dimethylvinylsiloxy-capped dimethylpolysiloxane having a viscosity of 30,000 mm²/s as component (A), 480 parts by weight of fused spherical aluminum oxide A having an average particle size of 43 µm and 320 parts by weight of ground aluminum oxide B having an average particle size of 1.2 µm as component (C), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.25 part by weight of chloroplatinic acid/vinylsiloxane complex (Pt content 1 wt%) as component (E) was uniformly mixed therewith at room temperature (25°C) for 20 minutes, yielding a first pack of a heat-conductive addition curable silicone composition.

A 5-L planetary mixer (Inoue Mfg., Inc.) was charged with 50 parts by weight of molecular both end dimethylvinylsiloxy-capped dimethylpolysiloxane having a viscosity of 600 mm²/s and 30 parts by weight of molecular both end dimethylvinylsiloxy-capped dimethylpolysiloxane having a viscosity of 30,000 mm²/s as component (A), 6.2 parts by weight of dimethylhydrogensiloxy-capped methylhydrogen/dimethylpolysiloxane having formula (B1) as component (B) ([Si-H group in polysiloxane as component (B)]/[total Si-Vi groups in molecular both end dimethylvinylsiloxy-capped dimethylpolysiloxanes as component (A) in the overall composition obtained by mixing first and second packs in a weight ratio of 1: 1] = 0.49), 480 parts by weight of fused spherical aluminum oxide A having an average particle size of 43 µm and 320 parts by weight of ground aluminum oxide B having an average particle size of 1.2 µm as component (C), 0.5 part by weight of bis(8-quinolinolato)copper(II) having the formula (D1) (Tokyo Chemical Industry Co., Ltd.) as component (D), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.03 part by weight of ethynyl decyl methyl carbinol was uniformly mixed therewith at room temperature (25°C) for 20 minutes, yielding a second pack of a heat-conductive addition curable silicone composition.

### [Example 4]

A 5-L planetary mixer (Inoue Mfg., Inc.) was charged with 50 parts by weight of molecular both end dimethylvinylsiloxy-capped dimethylpolysiloxane having a viscosity of 600 mm²/s and 40 parts by weight of molecular both end dimethylvinylsiloxy-capped dimethylpolysiloxane having a viscosity of 30,000 mm²/s as component (A), 480 parts by weight of fused spherical aluminum oxide A having an average particle size of 43 µm and 320 parts by weight of ground aluminum oxide B having an average particle size of 1.2 µm as component (C), 5 parts by weight of n-decyltrimethoxysilane as component (F), and 0.5 part by weight of bis(8-quinolinolato)copper(II) having formula (D1) (Tokyo Chemical Industry Co., Ltd.) as component (D). A heat-treated mixture was prepared by heat treating and mixing the components at 70°C for 1 hour and further heat treating and mixing at 150°C for 1 hour.

After the heat-treated mixture was fully cooled to room temperature (25°C), 0.25 part by weight of chloroplatinic acid/vinylsiloxane complex (Pt content 1 wt%) as component (E) was uniformly mixed therewith at room temperature (25°C) for 20 minutes, yielding a first pack of a heat-conductive addition curable silicone composition.

A 5-L planetary mixer (Inoue Mfg., Inc.) was charged with 50 parts by weight of molecular both end dimethylvinylsiloxy-capped dimethylpolysiloxane having a viscosity of 600 mm²/s and 30 parts by weight of molecular both end dimethylvinylsiloxy-capped dimethylpolysiloxane having a viscosity of 30,000 mm²/s as component (A), 6.2 parts by weight of dimethylhydrogensiloxy-capped methylhydrogen/dimethylpolysiloxane having formula (B1) as component (B) ([Si-H group in polysiloxane as component (B)]/[total Si-Vi groups in molecular both end dimethylvinylsiloxy-capped dimethylpolysiloxanes as component (A) in the overall composition obtained by mixing first and second packs in a weight ratio of 1:1]=0.49), 480 parts by weight of fused spherical aluminum oxide A having an average particle size of 43 µm and 320 parts by weight of ground aluminum oxide B having an average particle size of 1.2 µm as component (C), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.03 part by weight of ethynyl decyl methyl carbinol was uniformly mixed therewith at room temperature (25°C) for 20 minutes, yielding a second pack of a heat-conductive addition curable silicone composition.

### [Example 5]

First and second packs of a heat-conductive addition curable silicone composition were obtained as in Example 3 except that the amount of bis(8-quinolinolato)copper(II) (Tokyo Chemical Industry Co., Ltd.) as (D) in the second pack was changed to 5 parts by weight.

### [Example 6]

First and second packs of a heat-conductive addition curable silicone composition were obtained as in Example 3 except that 0.5 part by weight of tris(8-quinolinolato)aluminum(III) (Tokyo Chemical Industry Co., Ltd.) was used instead of bis(8-quinolinolato)copper(II) (Tokyo Chemical Industry Co., Ltd.) as (D).

### [Example 7]

First and second packs of a heat-conductive addition curable silicone composition were obtained as in Example 3 except that 0.5 part by weight of bis(8-quinolinolato)zinc(II) hydrate (Tokyo Chemical Industry Co., Ltd.) was used instead of bis(8-quinolinolato)copper(II) (Tokyo Chemical Industry Co., Ltd.) as (D).

### [Comparative Example 3]

First and second packs of a heat-conductive addition curable silicone composition were obtained as in Example 3 aside from omitting bis(8-quinolinolato)copper(II) (Tokyo Chemical Industry Co., Ltd.) as (D) from the second pack.

### [Comparative Example 4]

First and second packs of a heat-conductive addition curable silicone composition were obtained as in Example 3 except that 0.41 part by weight of 8-quinolinol (Tokyo Chemical Industry Co., Ltd.) was used instead of bis(8-quinolinolato)copper(II) (Tokyo Chemical Industry Co., Ltd.) as (D) in the second pack.

### [Example 8]

A 5-L planetary mixer (Inoue Mfg., Inc.) was charged with 50 parts by weight of molecular both end dimethylvinylsiloxy-capped dimethylpolysiloxane having a viscosity of 600 mm²/s and 40 parts by weight of molecular both end dimethylvinylsiloxy-capped dimethylpolysiloxane having a viscosity of 30,000 mm²/s as component (A), 510 parts by weight of fused spherical aluminum oxide A having an average particle size of 43 µm and 340 parts by weight of ground aluminum oxide B having an average particle size of 1.2 µm as component (C), and 15 parts by weight of organopolysiloxane having a viscosity of 30 mPa s at 25°C, represented by formula (G1), as component (G). A heat-treated mixture was prepared by heat treating and mixing the components at 150°C for 1 hour.

After the heat-treated mixture was fully cooled to room temperature (25°C), 0.25 part by weight of chloroplatinic acid/vinylsiloxane complex (Pt content 1 wt%) as component (E) was uniformly mixed therewith at room temperature (25°C) for 20 minutes, yielding a first pack of a heat-conductive addition curable silicone composition.

A 5-L planetary mixer (Inoue Mfg., Inc.) was charged with 50 parts by weight of molecular both end dimethylvinylsiloxy-capped dimethylpolysiloxane having a viscosity of 600 mm²/s and 30 parts by weight of molecular both end dimethylvinylsiloxy-capped dimethylpolysiloxane having a viscosity of 30,000 mm²/s as component (A), 6.2 parts by weight of dimethylhydrogensiloxy-capped methylhydrogen/dimethylpolysiloxane having formula (B1) as component (B) ([Si-H group in polysiloxane as component (B)]/[total Si-Vi groups in molecular both end dimethylvinylsiloxy-capped dimethylpolysiloxanes as component (A) in the overall composition obtained by mixing first and second packs in a weight ratio of 1: 1] = 0.49), 510 parts by weight of fused spherical aluminum oxide A having an average particle size of 43 µm and 340 parts by weight of ground aluminum oxide B having an average particle size of 1.2 µm as component (C), 0.5 part by weight of bis(8-quinolinolato)copper(II) having formula (D1) (Tokyo Chemical Industry Co., Ltd.) as component (D), and 15 parts by weight of organopolysiloxane having a viscosity of 30 mPa·s at 25°C, represented by formula (G1), as component (G). A heat-treated mixture was prepared by heat treating and mixing the components at 150°C for 1 hour.

After the heat-treated mixture was fully cooled to room temperature (25°C), 0.03 part by weight of ethynyl decyl methyl carbinol was uniformly mixed therewith at room temperature (25°C) for 20 minutes, yielding a second pack of a heat-conductive addition curable silicone composition.

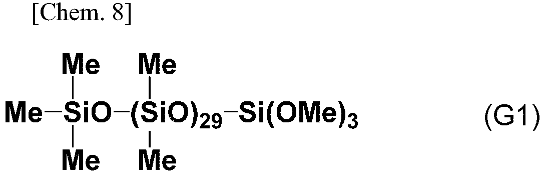

### [Comparative Example 5]

First and second packs of a heat-conductive addition curable silicone composition were obtained as in Example 8 aside from omitting bis(8-quinolinolato)copper(II) (Tokyo Chemical Industry Co., Ltd.) as (D) from the second pack.

### [Example 9]

A 5-L planetary mixer (Inoue Mfg., Inc.) was charged with 66 parts by weight of molecular both end dimethylvinylsiloxy-capped dimethylpolysiloxane having a viscosity of 600 mm²/s as component (A), 480 parts by weight of fused spherical aluminum oxide A having an average particle size of 43 µm and 320 parts by weight of ground aluminum oxide B having an average particle size of 1.2 µm as component (C), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.25 part by weight of chloroplatinic acid/vinylsiloxane complex (Pt content 1 wt%) as component (E) was uniformly mixed therewith at room temperature (25°C) for 20 minutes, yielding a first pack of a heat-conductive addition curable silicone composition.

A 5-L planetary mixer (Inoue Mfg., Inc.) was charged with 57 parts by weight of molecular both end dimethylvinylsiloxy-capped dimethylpolysiloxane having a viscosity of 600 mm²/s as component (A), 5.6 parts by weight of dimethylhydrogensiloxy-capped methylhydrogen/dimethylpolysiloxane having formula (B1) as component (B) ([Si-H group in polysiloxane as component (B)]/[total Si-Vi groups in molecular both end dimethylvinylsiloxy-capped dimethylpolysiloxanes as component (A) in the overall composition obtained by mixing first and second packs in a weight ratio of 1: 1] = 0.43), 480 parts by weight of fused spherical aluminum oxide A having an average particle size of 43 µm and 320 parts by weight of ground aluminum oxide B having an average particle size of 1.2 µm as component (C), 0.5 part by weight of bis(8-quinolinolato)copper(II) having formula (D1) (Tokyo Chemical Industry Co., Ltd.) as component (D), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.03 part by weight of ethynyl decyl methyl carbinol was uniformly mixed therewith at room temperature (25°C) for 20 minutes, yielding a second pack of a heat-conductive addition curable silicone composition.

### [Comparative Example 6]

First and second packs of a heat-conductive addition curable silicone composition were obtained as in Example 9 aside from omitting bis(8-quinolinolato)copper(II) (Tokyo Chemical Industry Co., Ltd.) as (D) from the second pack.

### [Comparative Example 7]

First and second packs of a heat-conductive addition curable silicone composition were obtained as in Example 9 except that 0.7 part by weight of copper(II) phthalocyanine (Tokyo Chemical Industry Co., Ltd.) was used instead of bis(8-quinolinolato)copper(II) (Tokyo Chemical Industry Co., Ltd.) in the second pack.

### [Comparative Example 8]

First and second packs of a heat-conductive addition curable silicone composition were obtained as in Example 9 except that 1 part by weight of diiron trioxide was used instead of bis(8-quinolinolato)copper(II) (Tokyo Chemical Industry Co., Ltd.) in the second pack.

### [Example 10]

A 5-L planetary mixer (Inoue Mfg., Inc.) was charged with 66 parts by weight of molecular both end dimethylvinylsiloxy-capped dimethylpolysiloxane having a viscosity of 600 mm²/s as component (A), 660 parts by weight of ground aluminum nitride C having an average particle size of 64 µm and 180 parts by weight of ground aluminum oxide B having an average particle size of 1.2 µm as component (C), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.25 part by weight of chloroplatinic acid/vinylsiloxane complex (Pt content 1 wt%) as component (E) was uniformly mixed therewith at room temperature (25°C) for 20 minutes, yielding a first pack of a heat-conductive addition curable silicone composition.

A 5-L planetary mixer (Inoue Mfg., Inc.) was charged with 57 parts by weight of molecular both end dimethylvinylsiloxy-capped dimethylpolysiloxane having a viscosity of 600 mm²/s as component (A), 5.6 parts by weight of dimethylhydrogensiloxy-capped methylhydrogen/dimethylpolysiloxane having formula (B1) as component (B) ([Si-H group in polysiloxane as component (B)]/[total Si-Vi groups in molecular both end dimethylvinylsiloxy-capped dimethylpolysiloxanes as component (A) in the overall composition obtained by mixing first and second packs in a weight ratio of 1: 1] = 0.43), 660 parts by weight of ground aluminum nitride C having an average particle size of 64 µm and 180 parts by weight of ground aluminum oxide B having an average particle size of 1.2 µm as component (C), 0.5 part by weight of bis(8-quinolinolato)copper(II) having formula (D1) (Tokyo Chemical Industry Co., Ltd.) as component (D), and 5 parts by weight of n-decyltrimethoxysilane as component (F). A heat-treated mixture was prepared by heat treating and mixing the components at 70°C for 1 hour and further heat treating and mixing at 150°C for 1 hour.

After the heat-treated mixture was fully cooled to room temperature (25°C), 0.03 part by weight of ethynyl decyl methyl carbinol was uniformly mixed therewith at room temperature (25°C) for 20 minutes, yielding a second pack of a heat-conductive addition curable silicone composition.

### [Comparative Example 9]

First and second packs of a heat-conductive addition curable silicone composition were obtained as in Example 10 aside from omitting bis(8-quinolinolato)copper(II) (Tokyo Chemical Industry Co., Ltd.) as (D) from the second pack.

The viscosity of component (A) described in Examples and Comparative Examples is a kinematic viscosity as measured at 25°C by an Ostwald viscometer. The average particle size of component (C) is a volume average particle diameter (cumulative average diameter D₅₀ or median diameter) as measured by laser diffractometry. The viscosity of heat-conductive addition curable silicone compositions 1 to 19 (consisting of first and second packs) is measured in a 25°C environment by a spiral viscometer: Malcom viscometer Type PC-10AA at a rotational speed of 10 rpm. The thermal conductivity of a silicone composition prior to cure is measured at 25°C by the hot disk method using a thermal properties meter TPS 2500 S (Kyoto Electronics Mfg. Co., Ltd.) (the hot disk method according to ISO 22007-2).

For the composition consisting of first and second packs, only components (C), (D), (F) and (G) in Tables are described below.
- C1:: a heat-conductive addition curable silicone composition having a thermal conductivity of 1.0 W/m·°C in Examples and Comparative Examples
- C2:: a heat-conductive addition curable silicone composition having a thermal conductivity of 2.5 W/m·°C in Examples and Comparative Examples
- C3:: a heat-conductive addition curable silicone composition having a thermal conductivity of 3.5 W/m·°C in Examples and Comparative Examples
- C4:: a heat-conductive addition curable silicone composition having a thermal conductivity of 5.0 W/m·°C in Examples and Comparative Examples
- D1:: bis(8-quinolinolato)copper(II)
- D2:: tris(8-quinolinolato)aluminum(III)
- D3:: bis(8-quinolinolato)zinc(II) hydrate
- D4 (comparison):: 8-quinolinol
- D5 (comparison):: copper(II) phthalocyanine
- D6 (comparison):: diiron trioxide
- F1:: n-decyltrimethoxysilane
- G1:: organopolysiloxane having a viscosity of 30 mPa·s at 25°C, represented by formula (G1)

Each heat-conductive addition curable silicone composition was prepared by mixing the first and second packs in a weight ratio of 1:1 at normal temperature (25°C) on a static mixer MXA 6.3-21 (Noritake Co., Ltd.) until uniform, discharged, fully deaerated in vacuum, cast into a mold sized to give a cured thickness of 6 mm, and allowed to cure at 25°C for 24 hours to form a sheet-shaped cured product. The cured product was measured for hardness by Shore OO hardness meter according to ASTM D 2240-05. Then the sheet-shaped cured product of each of heat-conductive addition curable silicone compositions 1 to 19 was aged at 150°C for 2,000 hours, while the hardness was measured every after 500 hours by Shore OO hardness meter according to ASTM D 2240-05. The results of viscosity, thermal conductivity, initial hardness, and hardness after aging are shown in Tables 1 to 5.

**[Table 1]**

| | Example 1 | Comp. Example 1 | Example 2 | Comp. Example 2 |
|---|---|---|---|---|
| (C) | C1 | C1 | C2 | C2 |
| (D) | D1 0.25 pbw 2nd pack | - | D1 0.5 pbw 2nd pack | - |
| (F) | F1 | F1 | - | - |
| (G) | - | - | - | - |
| Si-H in (B) / Si-alkenyl in (A), number | 0.41 | 0.41 | 0.49 | 0.49 |
| Viscosity of lst/2nd packs (Pa·s) | 111/116 | 111/105 | 312/320 | 312/319 |
| Thermal conductivity of lst/2nd packs (W/m·°C) | 1.2/1.2 | 1.2/1.1 | 2.7/2.8 | 2.7/2.7 |
| Hardness (Shore OO): initial | 26 | 30 | 75 | 76 |
| Hardness (Shore OO): after held at 150°C for 500 hours | 24 | 70 | 76 | 79 |
| Hardness (Shore OO): after held at 150°C for 1,000 hours | 24 | 70 | 78 | 83 |
| Hardness (Shore OO): after held at 150°C for 1,500 hours | 27 | 72 | 76 | 85 |
| Hardness (Shore OO): after held at 150°C for 2,000 hours | 27 | 71 | 78 | 88 |
| Hardness (Shore OO): after held at 150°C for 2,000 hours minus initial hardness | +1 | +41 | +3 | +12 |

**[Table 2]**

| | Example 3 | Example 4 | Example 5 | Example 6 |
|---|---|---|---|---|
| (C) | C2 | C2 | C2 | C2 |
| (D) | D1 0.5 pbw 2nd pack | D1 0.5 pbw 1st pack | D1 5 pbw 2nd pack | D2 0.5 pbw 2nd pack |
| (F) | F1 | F1 | F1 | F1 |
| (G) | - | - | - | - |
| Si-H in (B) / Si-alkenyl in (A), number | 0.49 | 0.49 | 0.49 | 0.49 |
| Viscosity of lst/2nd packs (Pa·s) | 243/254 | 243/279 | 225/220 | 243/201 |
| Thermal conductivity of lst/2nd packs (W/m·°C) | 2.5/2.6 | 2.5/2.8 | 2.6/2.8 | 2.5/2.7 |
| Hardness (Shore OO): initial | 63 | 61 | 59 | 61 |
| Hardness (Shore OO): after held at 150°C for 500 hours | 59 | 60 | 58 | 62 |
| Hardness (Shore OO): after held at 150°C for 1,000 hours | 64 | 61 | 60 | 64 |
| Hardness (Shore OO): after held at 150°C for 1,500 hours | 65 | 61 | 61 | 66 |
| Hardness (Shore OO): after held at 150°C for 2,000 hours | 65 | 63 | 64 | 68 |
| Hardness (Shore OO): after held at 150°C for 2,000 hours minus initial hardness | +2 | +2 | +5 | +7 |

**[Table 3]**

| | Example 7 | Comp. Example 3 | Comp. Example 4 | Example 8 |
|---|---|---|---|---|
| (C) | C2 | C2 | C2 | C2 |
| (D) | D3 0.5 pbw 2nd pack | - | D4 (comparison) 0.41 pbw 2nd pack | D1 0.5 pbw 2nd pack |
| (F) | F1 | F1 | F1 | - |
| (G) | - | - | - | G1 |
| Si-H in (B) / Si-alkenyl in (A), number | 0.49 | 0.49 | 0.49 | 0.49 |
| Viscosity of lst/2nd packs (Pa s) | 243/292 | 243/224 | 243/319 | 158/191 |
| Thermal conductivity of lst/2nd packs (W/m·°C) | 2.5/2.6 | 2.5/2.6 | 2.5/2.6 | 2.8/2.8 |
| Hardness (Shore OO): initial | 61 | 62 | did not cure | 60 |
| Hardness (Shore OO): after held at 150°C for 500 hours | 61 | 69 | | 62 |
| Hardness (Shore OO): after held at 150°C for 1,000 hours | 64 | 77 | | 62 |
| Hardness (Shore OO): after held at 150°C for 1,500 hours | 64 | 82 | | 69 |
| Hardness (Shore OO): after held at 150°C for 2,000 hours | 65 | 85 | | 72 |
| Hardness (Shore OO): after held at 150°C for 2,000 hours minus initial hardness | +4 | +23 | | +12 |

**[Table 4]**

| | Comp. Example 5 | Example 9 | Comp. Example 6 | Comp. Example 7 |
|---|---|---|---|---|
| (C) | C2 | C3 | C3 | C3 |
| (D) | - | D1 0.5 pbw 2nd pack | - | D5 (comparison) 0.7 pbw 2nd pack |
| (F) | - | F1 | F1 | F1 |
| (G) | G1 | - | - | - |
| Si-H in (B) / Si-alkenyl in (A), number | 0.49 | 0.43 | 0.43 | 0.43 |
| Viscosity of lst/2nd packs (Pa s) | 158/209 | 236/244 | 236/254 | 236/264 |
| Thermal conductivity of lst/2nd packs (W/m·°C) | 2.8/2.9 | 3.6/3.6 | 3.6/3.6 | 3.6/3.5 |
| Hardness (Shore OO): initial | 62 | 46 | 44 | 46 |
| Hardness (Shore OO): after held at 150°C for 500 hours | 72 | 36 | 82 | 48 |
| Hardness (Shore OO): after held at 150°C for 1,000 hours | 75 | 40 | 85 | 56 |
| Hardness (Shore OO): after held at 150°C for 1,500 hours | 75 | 45 | 87 | 61 |
| Hardness (Shore OO): after held at 150°C for 2,000 hours | 78 | 48 | 88 | 65 |
| Hardness (Shore OO): after held at 150°C for 2,000 hours minus initial hardness | +16 | +2 | +44 | +19 |

**[Table 5]**

| | Comparative Example 8 | Example 10 | Comparative Example 9 |
|---|---|---|---|
| (C) | C3 | C4 | C4 |
| (D) | D6 (comparison) 1 pbw 2nd pack | D1 0.5 pbw 2nd pack | - |
| (F) | F1 | F1 | F1 |
| (G) | - | - | - |
| Si-H in (B) / Si-alkenyl in (A), number | 0.43 | 0.43 | 0.43 |
| Viscosity of lst/2nd packs (Pa s) | 236/250 | 349/336 | 349/341 |
| Thermal conductivity of lst/2nd packs (W/m·°C) | 3.6/3.6 | 5.0/5.2 | 5.0/5.0 |
| Hardness (Shore OO): initial | 46 | 51 | 50 |
| Hardness (Shore OO): after held at 150°C for 500 hours | 68 | 51 | 68 |
| Hardness (Shore OO): after held at 150°C for 1,000 hours | 74 | 54 | 79 |
| Hardness (Shore OO): after held at 150°C for 1,500 hours | 79 | 52 | 87 |
| Hardness (Shore OO): after held at 150°C for 2,000 hours | 84 | 54 | 90 |
| Hardness (Shore OO): after held at 150°C for 2,000 hours minus initial hardness | +38 | +3 | +40 |

As is evident from the above results, the compositions of Examples 1 to 10 experience a minimized hardness increase after storage at 150°C for 2,000 hours. By contrast, the compositions of Comparative Examples 1 to 3 and 5 to 9 show an outstanding hardness increase after storage at 150°C for 2,000 hours. It is evident from Examples 2 and 3 that the addition of component (D) is effective for restraining any hardness increase even when the filler is not treated with the organosilane. It is also evident from Examples 3 and 4 that component (D) is effective for restraining any hardness increase as long as it is added to either one of first and second packs. It is evident from Examples 3, 6 and 7 that the center metal in the complex which is effective for restraining any hardness increase is not limited to copper. It is evident from Example 8 that even when the filler has been treated with organopolysiloxane, the effect of restraining any hardness increase is exerted by adding component (D). The results of Examples and Comparative Examples demonstrate that any hardness increase is restrained by blending component (D) in the compositions. According to the invention, there are provided heat-conductive silicone compositions and cured products thereof which restrain any hardness increase from the initial hardness upon 150°C aging.

### INDUSTRIAL APPLICABILITY

The silicone cured products obtained by curing heat-conductive silicone compositions experience a minimal hardness increase from the initial hardness upon hot aging. Since the cured products maintain the initial hardness upon receipt of the heat generated by electronic parts in the packages over a long time, an improvement in reliability is expectable in the heat dissipative/protective application for electronic parts including power devices, transistors, thyristors, and central processing units (CPU).

## Claims

1. A two-pack heat-conductive addition curable silicone composition consisting of first and second packs, wherein
the first pack comprises
(A) an organopolysiloxane having at least two silicon-bonded alkenyl groups per molecule,
(C) a heat-conductive filler, and
(E) a platinum group metal catalyst,
the second pack comprises
(A) an organopolysiloxane having at least two silicon-bonded alkenyl groups per molecule,
(B) an organohydrogenpolysiloxane having at least two silicon-bonded hydrogen atoms per molecule, and
(C) a heat-conductive filler,
the first pack is free of component (B),
the second pack is free of component (E),
either one or both of the first and second packs contains (D) a metal/8-quinolinol complex,
the overall composition obtained by combining the first pack with the second pack is such as to provide 0.1 to 5.0 silicon atom-bonded hydrogen atoms in component (B) per alkenyl group in component (A).

2. The two-pack heat-conductive addition curable silicone composition of claim 1, further comprising (F) an organosilane having the general formula (1):
R¹ₐR²_{b}Si(OR³)_{4-a-b} (1)
wherein R¹ is independently a C₄-C₂₀ monovalent hydrocarbon group, R² is independently a substituted or unsubstituted C₄-C₂₀ monovalent hydrocarbon group, R³ is independently a C₁-C₆ monovalent hydrocarbon group, a is an integer of 1 to 3, b is an integer of 0 to 2, a+b is an integer of 1 to 3.

3. The two-pack heat-conductive addition curable silicone composition of claim 1, further comprising (G) an organopolysiloxane having the general formula (2): 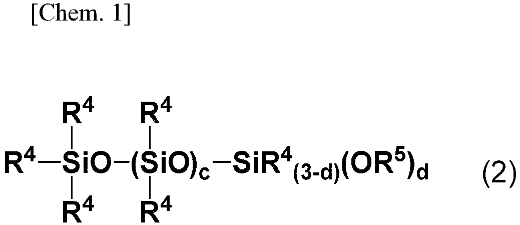 wherein R⁴ is independently a monovalent hydrocarbon group, R⁵ is independently an alkyl, alkoxyalkyl, alkenyl or acyl group, c is an integer of 5 to 100, and d is an integer of 1 to 3.

4. The two-pack heat-conductive addition curable silicone composition of claim 1 wherein the amount of component (C) blended in the first and second packs is 300 to 3,000 parts by weight per 100 parts by weight of components (A) and (B) combined,
the amount of component (D) blended is 0.001 to 5.0% by weight based on the overall composition obtained by combining the first pack with the second pack, and
the amount of component (E) blended is to provide 0.1 to 500 ppm by weight of platinum group metal based on the total weight of components (A) and (B) in the overall composition.

5. A two-pack heat-conductive addition cure type silicone cured product which is a cured product of the silicone composition of any one of claims 1 to 4.

6. The two-pack heat-conductive addition cure type silicone cured product of claim 5 which is of sheet form.
